# EUROPEAN PATENT APPLICATION

(11) **EP 4 799 804 A1**
(43) Date of publication of application: **02.09.2026**
(21) Application number: 25166300.1
(22) Date of filing: 26.03.2025
(51) Int. Cl.: B32B 5/02, B32B 5/18, B32B 7/06, B32B 7/12, B32B 27/06, B32B 29/00

(54) **CONSTRUCTION BOARD COMPOSITES WITH SELF-ADHERING ADHESIVE**

(30) Priority: 28.02.2025 US 202563764645 P
(71) Applicant: Holcim Technology Ltd., 6300 Zug (CH)
(72) Inventor: FRUTH, Barry, Nashville, 37214 (US)
(74) Representative: Kraus & Lederer PartGmbB

(57) **Abstract**

A construction board composite comprising (i) a construction board, wherein the construction board includes a first planar surface opposite a second planar surface; (ii) a plurality of pressure-sensitive adhesive zones disposed on the first planar surface, where each pressure-sensitive adhesive zone of the plurality of pressure-sensitive adhesive zones includes (a) a portion that contacts the first planar surface and (b) an exposed portion; and (iii) a release liner contacting at least a portion of the exposed portion.

## Description

### FIELD OF THE INVENTION

Embodiments of the present invention provide construction boards having a pressure-sensitive adhesive disposed thereon.

### BACKGROUND OF THE INVENTION

Pressure-sensitive adhesives have been used in the construction industry. For example, in the construction of low-sloped or flat roofs, polymeric single-ply membranes including a layer of pressure-sensitive adhesive have been used. The pressure-sensitive adhesive is used to secure the membrane to the underlying surface. The membrane provides a weather-protective layer for the roof system. These membrane composites are advantageously installed by the so-called "peel-and-stick" method. Numerous advantages are realized by using peel-and-stick methods including reduced installation time and labor, as well as the fact that the adhered systems can be formed without the use of significant volatile organic compounds.

Also, the construction of membranes carrying a pressure-sensitive adhesive is relatively straightforward since efficient techniques are available for applying the pressure-sensitive adhesive to the membrane within a factory setting. For example, the pressure-sensitive adhesive can be efficiently applied to the surface of a membrane as a hot-melt composition using relatively common coating techniques.

The skilled person appreciates that many flat or low-sloped roof systems also include one or more layers of construction board disposed between the roof deck and the membrane. In many situations, this may include a multi-layered assembly that includes, for example, two or more layers of insulation board and a layer of coverboard to protect the insulation board layer. The insulation boards, which are often referred to as board stock, can include a polyisocyanurate foam body that often ranges in thickness of from about 2 to about 4 inches. These boards also typically carry opposed facers that sandwich the foam body. In multi-layered roof systems, the bottom insulation layer is often mechanically fastened to the roof deck, and the subsequent layers, including the coverboard layer, can advantageously be adhered using, for example, a low-rise foam adhesive.

While low-rise foam adhesives are commonly used where there is a desire to adhere construction boards in place, it has also been proposed to factory-apply a pressure-sensitive adhesive to the facer of the boards. In other words, like the membranes that carry a pressure-sensitive adhesive layer, the construction boards can likewise be installed using the peel-and-stick installation method. These construction boards, however, have not been widely adopted.

### SUMMARY OF THE INVENTION

One or more embodiments of the present invention provide a construction board composite comprising (i) a construction board, wherein the construction board includes a first planar surface opposite a second planar surface; (ii) a plurality of pressure-sensitive adhesive zones disposed on the first planar surface, where each pressure-sensitive adhesive zone of the plurality of pressure-sensitive adhesive zones include a portion that contacts the first planar surface and an exposed portion; and (iii) a release liner contacting at least a portion of the exposed portion.

Still other embodiments of the present invention provide a flat or low-sloped roof system comprising (i) a roof deck; (ii) a layer of construction boards disposed on the roof deck; and (iii) a roofing membrane forming a water-proof protective layer over the roof system; where the layer of construction boards includes one or more construction boards adhered to the roof deck through a plurality of pressure-sensitive adhesive zones.

Yet other embodiments of the present invention provide a method of installing construction boards on a roof, the method comprising (i) providing a roof substrate; (ii) providing a plurality of construction board composites as described above, (iii) removing the release member from each construction board composite of the plurality of construction board composites to expose the pressure-sensitive adhesive zones; and (iv) contacting pressure-sensitive adhesive zones to the roof substrate.

Additional other embodiments of the present invention provide a method for forming a construction board composite, the method comprising (i) providing a construction board including a first planar surface opposite a second major surface; (ii) conveying the construction board in a machine direction; (iii) applying a plurality of pressure-sensitive adhesive zones the planar surface; and (iv) applying a release liner to contact at least a portion of pressure-sensitive adhesive zones.

### BRIEF DESCRIPTION OF THE DRAWINGS

FIG. 1 is a perspective fragmentary view of a construction board according to one or more embodiments of the present invention.

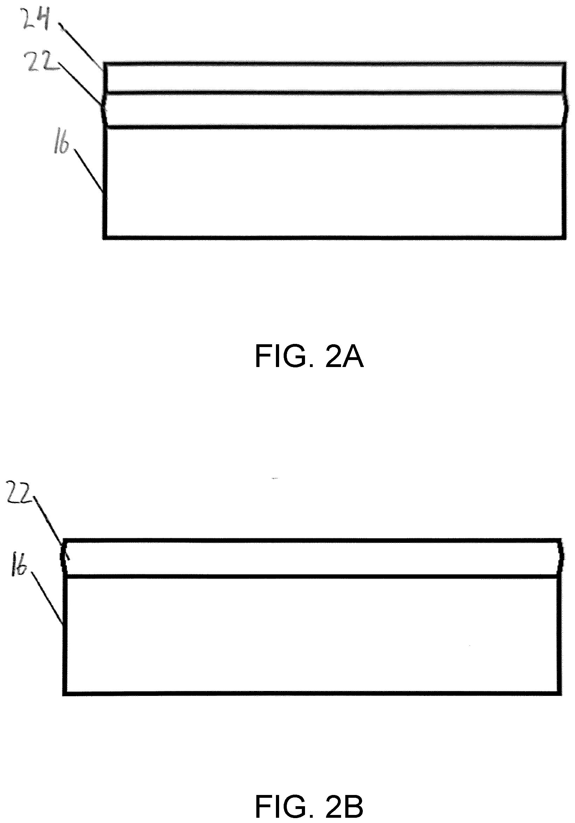

FIG. 2A is a cross sectional view of a construction board composite according to one or more embodiments of the present invention.
FIG. 2B is a cross sectional view of a construction board composite according to one or more embodiments of the present invention.
FIG. 3 is a perspective view of a continuous process for making construction board according to one or more embodiments of the present invention.
FIG. 4 is a schematic side view of a roofing system including a construction board attached to a roof deck according to one or more embodiments of the present invention.
FIG. 5 is a schematic side view of a roofing system including a construction board attached to a roof deck according to one or more embodiments of the present invention.
FIG. 6 is a perspective fragmentary cross-sectional view of a roofing system including a construction board attached to a roof deck according to one or more embodiments of the present invention.

### DETAILED DESCRIPTION OF ILLUSTRATIVE EMBODIMENTS

### INTRODUCTION

Embodiments of the present invention are based, at least in part, on the discovery of composite construction boards including a plurality of pressure-sensitive adhesive zones disposed upon a construction board. In some embodiments, the pressure-sensitive adhesive zones are formed by applying a pressure-sensitive adhesive composition to the construction board as a hot-melt. It has advantageously been discovered that these construction board composites, which can be used, for example, as insulation boards or cover boards on low-sloped or flat roofs, can be secured through the pressure-sensitive adhesive zones in a manner that withstands wind uplift forces at technologically useful temperatures. In one or more embodiments, the pressure-sensitive adhesive zones are characterized by a threshold thickness that results in technologically useful adhesion despite irregular surfaces on the board or the substrate to which the board is attached. In one or more embodiments, the composite construction boards are characterized by threshold pressure-sensitive adhesive coverage over the adhered surface of the boards to thereby provide technologically useful wind uplift resistance.

### CONSTRUCTION BOARD COMPOSITES - GENERALLY

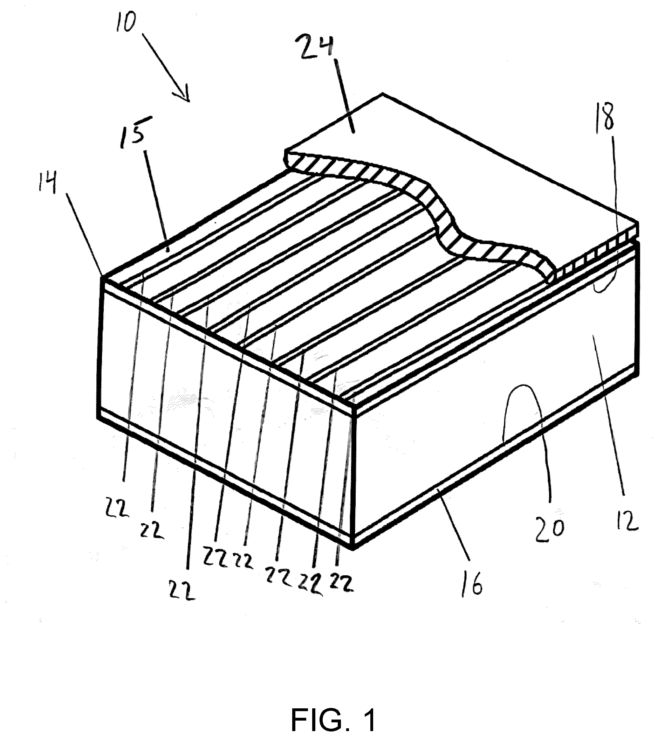

Construction board composites of one or more embodiments of the present invention, which may also be referred to as composite construction boards or self-adhering construction boards, may be described with reference to FIG. 1. FIG. 1 shows an exemplary construction board composite that is indicated generally by the numeral 10. Generally, construction board 10 includes a planar surface 15 upon which one or more adhesive zones 22 are disposed. As specifically shown, construction board composite 10 is a composite board including a foam layer 12, which may also be referred to as a foam body 12, that is sandwiched between first facer 14 and optional second facer 16. Facers 14 and 16 are attached to foam layer 12 at first planar surface 18 and second planar surface 20, respectively, of foam layer 12. In one or more embodiments, facer 14 (and optionally facer 16) is continuous over the entire planar surface 18 (or planar surface 20). In this embodiment, planar surface 15 is formed by an exterior layer of first facer 14.

As described above, the one or more adhesive zones, which may be referred to as a plurality of adhesive zones 22, are disposed on planar surface 15 of facer 14. In one or more embodiments, the plurality of adhesive zones 22 include a plurality of adhesive ribbons, which may also be referred to as adhesive beads, disposed on planar surface 15. A release member 24 may optionally be disposed on and removably attached to at least a portion of an exposed surface, which may also be referred to an exposed portion, of each of the plurality of adhesive zones 22. In one or more embodiments, a plurality of release members (not shown), are each attached to at least a portion of an exposed surface of a corresponding adhesive zone of the plurality of adhesive zones 22.

In one or more embodiments, each of the plurality of pressure-sensitive zones extends across a length of planar surface 15 from, for example, a first edge 13 to an opposite edge 17. In one or more embodiments, each of the plurality of pressure-sensitive adhesive zones 22 may be continuous along the length of the planar surface 15. In other embodiments, one or more of the plurality of pressure-sensitive adhesive zones 22 may be discontinuous (not shown) along the length of planar surface 15. Discontinuities may be advantageously included to reduce the overall amount of pressure-sensitive adhesive used, which may reduce the weight of the construction board and potentially wasted adhesive. It will also be appreciated that the pressure-sensitive zones may be provided in any number of geometric shapes including, for example, small patches of adhesive. In these and other embodiments, the patches of adhesive may be in a repeating pattern.

In one or more embodiments, each pressure-sensitive adhesive zones of the plurality of pressure-sensitive zones may be spaced apart (e.g. laterally) from one another by greater than 3 inches (i.e. edge to edge to thereby provide a gap of 3 inches), in other embodiments greater than 4 inches, in other embodiments greater than 5 inches, and in other embodiments greater than 6 inches. In these and other embodiments, each pressure-sensitive adhesive zones of the plurality of pressure-sensitive zones may be spaced apart by less than 16 inches, in other embodiments less 12 inches, and in other embodiments less than 8 inches. In one or more embodiments, each pressure-sensitive adhesive zones of the plurality of pressure-sensitive zones may be spaced apart by about 4 to about 16 inches, in other embodiments from about 5 to about 12 inches, and in other embodiments from about 6 to about 8 inches.

As indicated above, embodiments of the invention provide usefulness based upon the degree to which the pressure-sensitive adhesive zones cover the planar surface of the board on which they are disposed. In one or more embodiments, the construction board composites of the present invention are characterized by the area of the planar surface on which the pressure-sensitive zones are disposed that is covered by the pressure-sensitive adhesive zones. For example, the area of planar surface 15 that is covered by adhesive zones 22. In one or more embodiments, greater than 5%, in other embodiments greater than 10%, in other embodiments greater than 20%, in other embodiments greater than 30%, and in other embodiments greater than 40% of the planar surface on which the pressure-sensitive adhesive is disposed is covered by the pressure-sensitive adhesive zones. In these or other embodiments, less than 75%, in other embodiments less than 60%, in other embodiments less than 50%, in other embodiments less than 40%, and in other embodiments less than 30% of the planar surface on which the pressure-sensitive adhesive is disposed is covered by the pressure-sensitive adhesive zones. In one or more embodiments, from about 5 to about 75%, in other embodiments from about 10 to about 60%, and in other embodiments from about 20 to about 40% of the planar surface on which the pressure-sensitive adhesive is disposed is covered by the pressure-sensitive adhesive zones.

### PRESSURE-SENSITIVE ADHESIVE ZONES

As indicated above, embodiments of the invention provide usefulness based upon the thickness of the adhesive zones, which the skilled person appreciates is the height of the pressure-sensitive zone from the planar surface on which it is disposed. In one or more embodiments, each of the plurality of pressure-sensitive adhesive zones may have a thickness of greater than 2.03 mm (80 mil), in other embodiments greater than 2.54 mm (100 mil), in other embodiments greater than 3.18 mm (125 mil), in other embodiments greater than 3.81 mm (150 mil), in other embodiments greater than 4.45 mm (175 mil), and in other embodiments greater than 5.08 mm (200 mil). In these or other embodiments, each of the plurality of pressure-sensitive adhesive zones has a thickness of less than 7.62 mm (300 mil), in other embodiments less than 6.35 mm (250 mil), and in other embodiments less than 5.08 mm (200 mil). In one or more embodiments, each of the plurality of pressure-sensitive adhesive zones has a thickness of from about 1.27 mm to about 7.62 mm (about 50 mil to 300 mil), in other embodiments from about 2.54 mm to about 7.62 mm (about 100 mil to 300 mil), and in other embodiments from 3.81 mm to about 7.62 mm (about 150 mil to 300 mil).

In those embodiments where the pressure-sensitive adhesive zones are in the form of pressure-sensitive ribbon (i.e. an elongated strand of material), each of the plurality of pressure-sensitive adhesive ribbons may have a width of greater than 1.27 mm (50 mil), in other embodiments greater than 2.54 mm (100 mil), and in other embodiments greater than 3.81 mm (150 mil). In these or other embodiments, each of the plurality of pressure-sensitive adhesive ribbons may have a width of less than 7.62 mm (300 mil), in other embodiments less than 6.35 mm (250 mil), and in other embodiments less than 5.08 mm (200 mil). In one or more embodiments, each of the plurality of pressure-sensitive adhesive ribbons may have a width of from about 1.27 about 7.62 mm (about 50 to about 300 mil), in other embodiments from about 2.54 to about 7.62 mm (about 100 to about 300 mil), and in other embodiments from 3.81 to about 7.62 mm (about 150 to about 300 mil).

### PRESSURE-SENSITIVE ADHESIVES

The skilled person understands that pressure-sensitive adhesives include those materials that, through a balance between flow and resistance to flow, can bond to a substrate through contact and the application of some pressure. The pressure-sensitive adhesives employed in the present invention include hot-melt pressure-sensitive adhesives, which the skilled person understands includes those materials that will flow upon heating to an extent that they can be applied to a substrate by, for example, extrusion. Upon cooling, the material regains its balance of flow and resistance to flow to thereby operate as a pressure-sensitive adhesive.

Many hot-melt pressure-sensitive adhesives are known to those skilled in the art, and practice of this invention is not necessarily limited by the composition of the adhesive. Known hot-melt pressure-sensitive adhesive compositions that may be employed in practicing the present invention include, but are not limited to, those compositions based upon acrylic polymers, butyl rubber, ethylene vinyl acetate, natural rubber, nitrile rubber, silicone rubber, styrene block copolymers, polyolefins, ethylene-propylene-diene rubber, polybutenes, atactic polyalpha olefins, and/or vinyl ether polymers. In combination with these base polymers, the pressure-sensitive adhesive compositions may include a variety of complementary constituents such as, but not limited to, tackifying resins, waxes, antioxidants, and plasticizers. The skilled person understands that these formulations may be tailored to adjust parameters such as open time, tack, and surface energy. Exemplary pressure-sensitive adhesives are described, for example, in U.S. Patent Nos. 8,378,105, 8,263,680, 8,968,853, 9,828,535, and 11,306,226, which is incorporated herein by reference. Suitable adhesives are commercially available from sources including Bostik, Henkel AG & Co. KGaA, Novamelt, Kraton Polymers, and Paramelt. In other embodiments, the adhesive composition is a UV-curable hot melt composition such as a UV-curable acrylic or acrylate resin. These curable resins are known in the art as described in U.S. Patent Nos. 6,720,399, 6,753,079, 6,831,114, 6,881,442, 6,887,917, 7,304,119, 7,358,319, 10,370,854 and 10,712,166, as well as U.S. Publication Nos. 2016/0230392, 2017/0015083, 2017/0114543, 2019/0071872, 2019/0316359, and 2020/0299965, all of which are incorporated herein by reference. Useful UV-curable acrylate resins include those available under the tradename acResin (BASF), AroCure (Ashland Chemical), and NovaMeltRC (NovaMelt).

### PRESSURE-SENSITIVE ADHESIVE PROPERTIES

In one or more embodiments, the pressure-sensitive adhesive may be characterized by a tack, as defined by the Standard Test Method for Tack of Pressure-Sensitive Adhesives by Rolling Ball (ASTM D3121-06), of less than 30 cm, in other embodiments less than 20 cm, and in other embodiments less than 10 cm.

In one or more embodiments, the pressure-sensitive adhesive may be characterized by providing a minimum peel strength, as defined by the Standard Test Method for Peel Adhesion of Pressure-Sensitive Label Stocks at 90° Angle (ASTM D6252/D6252M-98 (2011)), of at least 0.1 pli, in other embodiments at least 0.3 pli, and in other embodiments at least 0.5 pli.

In one or more embodiments, the pressure-sensitive adhesive composition may be characterized as a solid at temperatures below 200 °F, in other embodiments below 190 °F, in other embodiments below 180 °F, and in other embodiments below 170 °F. In these or other embodiments, the pressure-sensitive adhesive composition is characterized as a fluid above 200 °F, in other embodiments above 250 °F, in other embodiments above 300 °F, and in other embodiments above 350 °F.

In one or more embodiments, the pressure-sensitive adhesive composition may be characterized by its viscosity, which may be obtained by using standard procedures with a Brookfield Viscometer. In one or more embodiments, the pressure-sensitive adhesive composition has a viscosity defined according to ASTM 1084-16R21 or ASTM D3236-15R21, at 300 °F, of greater than 10,000, in other embodiments greater than 12,000, and in other embodiments greater than 14,000 cP. In these or other embodiments, the pressure-sensitive adhesive composition has a viscosity, at 300 °F, of less than 22,000, in other embodiments less than 20,000, and in other embodiments less than 18,000 cP. In one or more embodiments, the pressure-sensitive adhesive composition has a viscosity, at 300 °F, of from about 10,000 to about 100,000, in other embodiments from about 12,000 to about 50,000, and in other embodiments from about 14,000 to about 25,000 cP.

In one or more embodiments, the pressure-sensitive adhesive composition may be characterized by its glass transition temperature (T_{g}), which may be obtained by using standard Differential Scanning Calorimetry (DSC) techniques. In one or more embodiments, the pressure-sensitive adhesive composition has a T_{g} defined according to ASTM E1356-23 of greater than -100 °C, in other embodiments greater than -70 °C, and in other embodiments greater than -50 °C. In these or other embodiments, the pressure-sensitive adhesive composition has a T_{g} of less than -15 °C, in other embodiments less than -20 °C, and in other embodiments less than -30 °C. In one or more embodiments, the pressure-sensitive adhesive composition has a T_{g} of from about -100 °C to about -15 °C, in other embodiments from about -70 °C to about -20 °C, and in other embodiments from about -50 °C to about -30 °C.

### CONSTRUCTION BOARDS - GENERALLY

As described above, the pressure-sensitive adhesive zones are disposed on a planar surface of a construction board so that the board is configured to be secured to a substrate through the pressure-sensitive adhesive. Generally, practice of the invention is not necessarily limited by the selection of a particular construction boards that are used in this invention. In one or more embodiments, the construction board is advantageously a construction board that is used within a roofing system. For example, useful construction boards may include, but are not limited to, foamed boards (e.g. polystyrene or polyisocyanurate board stock), fiber boards (e.g. OSB boards), masonite boards, gypsum boards (e.g. DensDeck), and perlite boards. As the skilled person within the roofing art appreciates, fiber boards, masonite boards, gypsum boards, perlite boards, and high-density foam boards are often referred to as cover boards, and low-density foam boards are often referred to as insulation boards or board stock.

In one or more embodiments, the construction boards employed in the present invention are advantageously foam construction boards that, as described with reference to FIG. 1 above, may include a foam body with opposed facers forming opposed planar surface of the construction board.

### CONSTRUCTION BOARDS - FOAM LAYER

In one or more embodiments, the foam body, which may also be referred to as foam layer, includes a rigid closed-cell foam structure. In one or more embodiments, the foam layer may include a polyurethane, polyurea, phenolic, or polyisocyanurate foam.

The skilled person appreciates that the foam body (i.e. the polyisocyanurate and/or polyurethane foam) can be manufactured by mixing a first stream that includes an isocyanate-containing compound with a second stream that includes an isocyanate-reactive compound. Using conventional terminology, the first stream (i.e., the stream including an isocyanate-containing compound) may be referred to as an A-side stream, an A-side reactant stream, or simply an A stream. Likewise, the second stream (i.e., the stream including an isocyanate-reactive compound) may be referred to as a B-side stream, B-side reactant stream, or simply B stream. In any event, the reaction that ensues produces a foam that, according to one or more kinetic and/or thermodynamic properties, develops over a period of time. Unless otherwise specified, therefore, the term developing foam will be understood to refer to the mixture of the polyurethane and/or polyisocyanurate reactants as they exist prior to cure, which when the reaction mixture is appreciably immobile (e.g., is no longer flowable).

The skilled person also understands that the foam body is a cellular structure that may include an interconnected network of solid struts or plates that form the edges and faces of cells. These cellular structures may, in one or more embodiments, also be defined by a "relative density" that is less than 0.8, in other embodiments less than 0.5, and in other embodiments less than 0.3. As those skilled in the art will appreciate, "relative density" refers to the density of the cellular material divided by that of the solid from which the cell walls are made. As the relative density increases, the cell walls thicken and the pore space shrinks such that at some point there is a transition from a cellular structure to one that is better defied as a solid containing isolated pores.

In one or more embodiments, the foam body is characterized by a desired ISO index. As the skilled person understands, ISO index correlates to PIR/PUR ratio and can determined by IR spectroscopy using standard foams of known index (note that ratio of 3 PIR/PUR provides an ISO Index of 300), of greater than 150, in other embodiments greater than 180, in other embodiments greater than 200, in other embodiments greater than 220, in other embodiments greater than 240, in other embodiments greater than 260, in other embodiments greater than 270, in other embodiments greater than 285, in other embodiments greater than 300, in other embodiments greater than 315, and in other embodiments greater than 325. In these or other embodiments, the foam may be characterized by an ISO index of less than 350, in other embodiments less than 300, in other embodiments less than 275, in other embodiments less than 250, in other embodiments less than 225, and in other embodiments less than 200.

In one or more embodiments of the present invention, one layer of construction boards includes polyisocyanurate foam board characterized by a relatively low density (i.e. low-density foam boards), and one layer of construction boards includes polyisocyanurate foam board characterized by a relatively high density (i.e. high-density foam boards). In one or more embodiments, the foam board having a relatively low density is the first layer of construction boards on the roof surface and is mechanically attached to the roof deck. In one or more embodiments, the second layer of construction boards, which is disposed above the first, is a layer of foam boards having a relatively high density. In one or more embodiments the first and second layers of construction boards both include foam boards characterized by a relatively low density, and then an optional third layer of construction board is disposed over the first and second layers, where the third layer of construction boards may include coverboards (e.g. high density foam boards).

In one or more embodiments, the foam boards that include polyisocyanurate foam characterized by a relatively low density have a density defined according to ASTM ASTM C 303-21. In one or more embodiments, the density (ASTM C 303-21) of the foam is less than 2.5 pounds per cubic foot (12.2 kg/m²), in other embodiments less than 2.0 pounds per cubic foot (9.8 kg/m²), in other embodiments less than 1.9 pounds per cubic foot (9.3 kg/m²), and still in other embodiments less than 1.8 pounds per cubic foot (8.8 kg/m²). In one or more embodiments, foam characterized by a relatively low density has a density that is greater than 1.50 pounds per cubic foot (7.32 kg/m²) and in other embodiments greater than 1.55 pounds per cubic foot (7.57 kg/m²).

Where the density of the foam layer is less than 2.5 pounds per cubic foot, it may be advantageous for the foam layer to be characterized by having an index of at least 120, in other embodiments at least 150, in other embodiments at least 175, in other embodiments at least 200, and in other embodiments at least 225, as determined by PIR/PUR ratio as determined by IR spectroscopy using standard foams of known index (note that ratio of 3 PIR/PUR provides an ISO Index of 300). Foam construction boards having a foam layer of similar nature are described in U.S. Patent Nos. 6,117,375, 6,044,604, 5,891,563, 5,573,092, U.S. Publication Nos. 2004/0109983, 2003/0082365, 2003/0153656, 2003/0032351, and 2002/0013379, as well as U.S. Application Serial Nos. 10/640,895, 10/925,654, and 10/632,343, which are incorporated herein by reference.

In other embodiments, foam layer 12 may be characterized by density that is greater than 2.5 pounds per cubic foot (12.2 kg/m²), as determined according to ASTM C303, in other embodiments the density is greater than 2.8 pounds per cubic foot (13.7 kg/m²), in other embodiments greater than 3.0 pounds per cubic foot (14.6 kg/m²), and still in other embodiments greater than 3.5 pounds per cubic foot (17.1 kg/m²). In one or more embodiments, the density of foam layer 12 of the construction boards may be less than 20 pounds per cubic foot (97.6 kg/m²), in other embodiments less than 10 pounds per cubic foot (48.8 kg/m²), in other embodiments less than 6 pounds per cubic foot (29.3 kg/m²), in other embodiments less than 5.9 pounds per cubic foot (28.8 kg/m²), in other embodiments less than 5.8 pounds per cubic foot (28.3 kg/m²), in other embodiments less than 5.7 pounds per cubic foot (27.8 kg/m²), in other embodiments less than 5.6 pounds per cubic foot (27.3 kg/m²), and still in other embodiments less than 5.5 pounds per cubic foot (26.9 kg/m²). Foam construction boards having a foam layer of similar nature are described in U.S. Application Serial Nos. 11/343,466 and 12/525,159, which are incorporated herein by reference.

Where the density of foam layer 12 is greater than 2.5 pounds per cubic foot, it may be advantageous for foam layer 12 to be characterized by an ISO Index, as determined by PIR/PUR ratio as determined by IR spectroscopy using standard foams of known index (note that ratio of 3 PIR/PUR provides an ISO Index of 300) of at least 180, in other embodiments at least 200, in other embodiments at least 220, in other embodiments at least 270, in other embodiments at least 285, in other embodiments at least 300, in other embodiments at least 315, and in other embodiments at least 325. In these or other embodiments, the ISO Index may be less than 360, in other embodiments less than 350, in other embodiments less than 340, and in other embodiments less than 335.

In one or more embodiments, the construction boards are insulation boards that meet the requirements of ASTM C1289. In other embodiments, the construction boards are cover boards that meet the specifications of ASTM C1289.

### CONSTRUCTION BOARD - FACERS

The construction board facers can be the same or different. In one or more embodiments, the facers may include a variety of materials or compositions, many of which are known or conventional in the art. Useful facers include those comprising aluminum foil, cellulosic fibers, reinforced cellulosic fibers, craft paper, coated glass fiber mats, uncoated glass fiber mats, chopped glass, and combinations thereof. Useful facer materials are known as described in U.S. Patent Nos. 6,774,071, 6,355,701, RE 36674, 6,044,604, and 5,891,563, which are incorporated herein by reference.

The thickness of the facer material may vary; for example, it may be from about 0.01 to about 1.00 inches thick (0.025-2.54 cm) or in other embodiments from about 0.015 to about 0.050 inches thick (0.04-0.13 cm), or in other embodiments from about 0.015 to about 0.030 inches thick (0.04-0.07 cm). The facer materials can also include more robust or rigid materials such as fiber board, perlite board, or gypsum board. The thickness of the rigid facer can vary; for example, the thickness of the rigid facer can be from about 0.2 to about 1.5 inches (0.51-3.8 cm), or in other embodiments from about 0.25 to about 1.0 inches (0.64-2.54 cm).

In one or more embodiments, facers are optional. Therefore, in one or more embodiments, the construction board may be facerless. The ability to produce facerless construction boards is known as described in U.S. Patent No. 6,117,375, which is incorporated herein by reference.

In other embodiments, the facers may be generally solid material such as wood, particle, or fiber board. In one or more embodiments, the facer is a wood board such as plywood, luan board, or oriented-strand board (OSB). In other embodiments, the facer board is a particle or fiber board such as fiber boards, masonite board, wall board, gypsum board, gypsum products such as DensDeck, perlite boards, and high density foam boards.

### RELEASE MEMBER

As noted above, the construction composites of the invention may include a release member removably attached to the pressure-sensitive adhesive zones. The skilled person understands that these release members may facilitate storage and transportation of the composite board since these boards are typically transported in bundled stacks that may or may not be palletized, shrink wrapped, or otherwise handled. Use of a release liner to protect the plurality of adhesive zones during transport, storage, delivery, and handling prior to installation may therefore be desirable.

In one or more embodiments, the release liner (e.g. release liner 24), which may also be referred to as release members, includes a polymeric film or extrudate. This polymeric film or extrudate may include a single polymeric layer or may include two or more polymeric layers laminated or coextruded to one another. In other embodiments, the release liner includes a cellulosic substrate having a polymeric film or coating applied thereon, which film or coating may be referred to as a polymeric layer. The polymeric layer may be a single layer or include multiple layers.

In one or more embodiments, the release liner comprises a plurality of separate polymeric films or extrudates, each of the plurality of separate polymeric films or extrudates contacting a separate pressure-sensitive adhesive zone of the plurality of pressure-sensitive adhesive zones. In these and other embodiments, each of the plurality of pressure-sensitive adhesive zones may be selectively exposed by removing each of the separate polymeric films or extrudates.

Suitable materials for forming a release liner that is a polymeric film or extrudate include polypropylene, polyester, high-density polyethylene, medium-density polyethylene, low-density polyethylene, polystyrene or high-impact polystyrene. Suitable materials for forming a polymeric layer on a cellulosic-based release liner include siloxane-based materials, butadiene-based materials, organic materials (e.g. styrene-butadiene rubber latex), as well as those polymeric materials employed to form a film or extrudate as described above. These polymeric materials may offer a number of advantageous properties including high moisture resistance, good resistance to temperature fluctuations during processing and storage, and increased tear and wrinkle resistance. The above referenced films and materials may be coated with a release agent, (e.g. - silicone).

In one or more embodiments, the release member is characterized by a thickness of from about 15 to about 80 µm, in other embodiments from about 18 to about 75 µm, and in other embodiments from about 20 to about 50 µm.

### METHOD OF CONSTRUCTING COMPOSITE CONSTRUCTION BOARD

The construction board composites of the present invention may be prepared by providing a construction board, depositing a hot melt adhesive on a planar surface of the board, and then optionally attaching a release member to the adhesive.

The construction boards employed in the present invention may be prepared by using conventional techniques. For example, foam construction boards can be manufactured by using known techniques for producing polyurethane or polyisocyanurate insulation boards. Generally, the process includes mixing a first stream that includes an isocyanate-containing compound with a second stream that includes an isocyanate-reactive compound. Using conventional terminology, the first stream (i.e., the stream including an isocyanate-containing compound) may be referred to as an A-side stream, an A-side reactant stream, or simply an A stream. Likewise, the second stream (i.e., the stream including an isocyanate-reactive compound) may be referred to as a B-side stream, B-side reactant stream, or simply B stream.

The mixture of the A-side and the B-side stream is then deposited on to a facer that, within a continuous process, is continuously conveyed below the mix head in which the A-side and B-side streams are mixed. After the mixture is deposited on to the first facer, a second facer material is then applied over the mixture, which is in the form of a rising or expanding foam at this point. In other words, the mixture is sandwiched between two facer materials that are being continuously conveyed. This sandwiched structure is then typically conveyed into a laminator where the polyurethane/polyisocyanurate reaction is accelerated through the application of heat. Processes for the manufacture of polyurethane or polyisocyanurate insulation boards are known in the art as described in U.S. Patent Nos. 6,117,375, 6,044,604, 5,891,563, 5,573,092, U.S. Publication Nos. 2004/0109983, 2003/0082365, 2003/0153656, 2003/0032351, and 2002/0013379, as well as U.S. Serial Nos. 10/640,895, 10/925,654, and 10/632,343, which are incorporated herein by reference.

Once the construction board is constructed-at least partially-the next step of the process includes applying a molten pressure-sensitive adhesive material (i.e. as a hot melt) to a planar surface of the construction board; e.g. to one of the facers of the board. As will be appreciated by those skilled in the art, this step may take place prior to or after final cutting or fabrication of the board (e.g., prior to trimming). In one or more embodiments, the hot-melt pressure-sensitive adhesive material is continuously applied to a surface of the facer as the partially constructed construction board exits the laminator. The hot-melt adhesive can be extruded on to the facer by using known apparatus for depositing the adhesive in the desired shape.

Optionally after the adhesive is allowed to cool, at least to a desired solid state, a release member can then be applied to the adhesive, and then final cutting and finishing of the construction board can take place. For example, the continuous structure can be cut to length, trimmed, and ultimately stacked for storage and/or shipment.

In other embodiments, once the construction board is constructed, it is further cut or otherwise fabricated into a plurality of construction boards. In these and other embodiments, this plurality of construction boards can be bundled or otherwise stored while the foam continues to cure. The boards may then be provided to a separate process where the pressure-sensitive adhesive is applied to a planar surface of the board in a desired manner. For example, the boards can be delivered to a continuous process where adhesive streams are continuously applied to a surface of the facer as a hot-melt adhesive. The hot-melt adhesive can be extruded on to the facer by using known apparatus such an adhesive coater. A release film can then be applied to the adhesive layer, and then finishing of the construction board can take place. For example, the construction boards with pressure-sensitive adhesive applied may be stacked and packaged for storage and/or shipment.

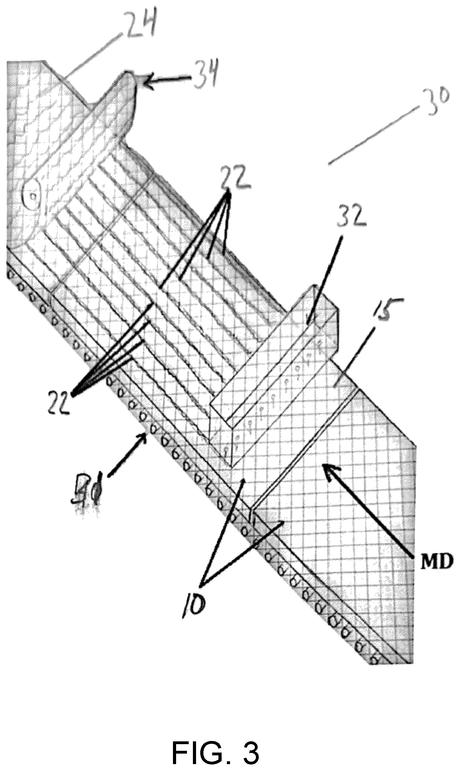

Embodiments of the invention can be described with reference to FIG. 3, which shows a system 30 that can facilitate construction of the composite boards of this invention. For example, the construction boards 10 can be conveyed in a machine direction MD using conveyor 31. The conveyance path of conveyor 31 includes a device for depositing hot melt adhesive in a desired manner on the planar surface 15 of the boards. For example, the device may include a plurality of extruder heads that extrude hot-melt pressure-sensitive adhesive on to planar surface 15 and thereby form a plurality of adhesive zones 22 in the form of a plurality of adhesive ribbons. Further along the conveyance path of conveyor 31 includes an station where a release member 24 is applied to at least a portion of an exposed surface of each of the plurality of adhesive zones 22.

It will also be appreciated that in alternative embodiments, the adhesive zones can be disposed on to a facer prior to formation of the construction board, such as prior to forming the foam body of the board. For example, the hot melt adhesive is pre-applied to one surface of the facer material prior to mating the facer with the foam or rising foam. For example, a plurality of pressure-sensitive adhesive zones, as discussed above, can be applied to one planar surface of a facer, and a release liner can be removably mated to the exposed surface of the plurality of pressure-sensitive adhesive zones. The facer, which now carries the plurality of pressure-sensitive adhesive zones and release liner, can be employed in the manufacture of construction boards. Namely, the planar surface of the facer opposite the plurality of pressure-sensitive adhesive zones can be mated with the foam or rising foam (e.g., the rising foam can be deposited on to this planar surface of the facer).

In yet other alternative embodiments, a composite that includes a release member and a plurality of adhesive zones can be employed in the process for manufacturing the construction boards as shown in FIG. 3. In other words, a release member composite, which is a release member carrying a plurality of pressure-sensitive adhesive zones, can be fabricated by melt extruding adhesive onto a surface of the release member. This release member composite can then be mated to a construction board (e.g. to a facer of a construction board) by contacting the plurality of adhesive zones to a planar surface 15 of the construction board.

### INDUSTRIAL APPLICABILITY

The composite construction boards of the present invention can be used to construct a roof system for a flat or low-sloped roof. Advantageously, the composite construction boards of the invention can be installed using peel-and-stick methods whereby the release member is removed to expose the pressure-sensitive adhesive zones, and then mating the construction board to the substrate may contact the exposed adhesive zones to the substrate and applying pressure to enhance the bond to the substrate. In one or more embodiments, the construction board composites can advantageously be adhered to the roof surface without the need for ballasting or other weight mechanisms that are typically employed to prevent wind uplift immediately following initial installation since the construction board composites of the present invention advantageously have sufficient initial bond strength. Practice of the present invention is advantageous in the construction of flat or low-sloped roofs. As the skilled person appreciates, a low-sloped roof includes a roof having a slope of less than 3:12, in other embodiments less than 2.5:12, and in other embodiments less than 2:12.

Additionally, the composite boards of the present invention can be used to construct roof system that advantageously meet industry standards for wind uplift resistance in the absence of other securements to the substrate (e.g. to the roof deck). The skilled person understands that these tests can be performed according to Factory Mutual 4470 (2012) wind uplift test or Underwriters Laboratories UL580 (2006) wind uplift test. In one or more embodiments, the composite boards of the present invention can be used to prepare roof systems that achieve an excess of 90 pounds per square foot, in other embodiments, an excess of 180 pounds per square foot, and in other embodiments an excess of 270 pounds per square foot pursuant to these tests.

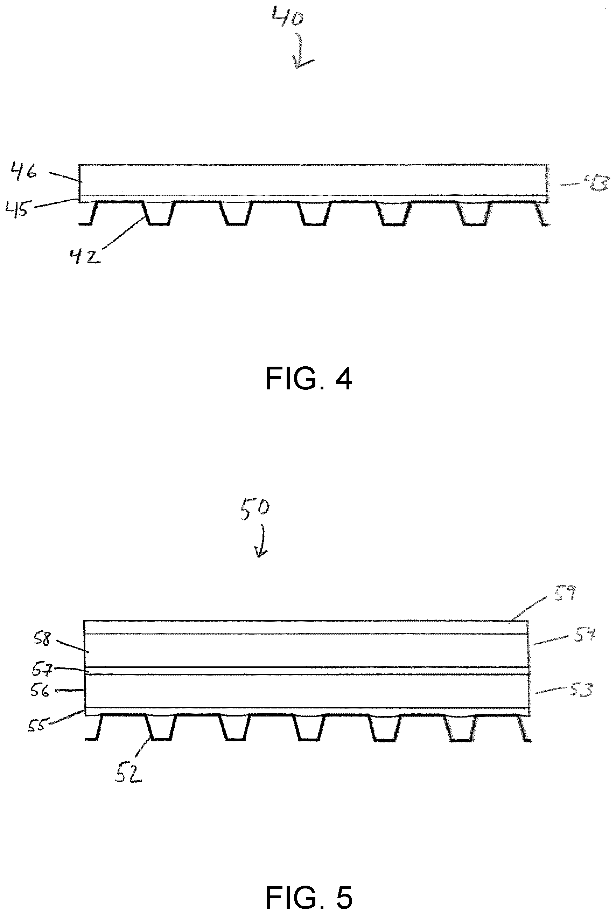

Roof systems including the construction board composites of the present invention can be described with reference to FIGS. 4-6, which show a roof system 40, 50 including roof deck 42, 52, insulation board 43, 53, cover board 54, and membrane 59. Insulation board 43, 53 and cover board 54 may be constructed according to the present invention. That is, they may include a plurality of pressure-sensitive adhesive zones, 45, 55, and 57, respectively. Insulation board 43, 53, cover board 54 may be installed by using peel-and-stick techniques whereby insulation board 43, 53 can be secured to roof deck 42, 52 by first removing a release liner and then securing insulation board 43, 53 to roof deck 42, 52 through the plurality of pressure-sensitive adhesive zones 45, 55. Similarly, cover board 54 can be applied to insulation board 53 through plurality of pressure-sensitive adhesive zones, 57 after removal of a release liner. Membrane 59 can be applied over cover board 54 using conventional techniques.

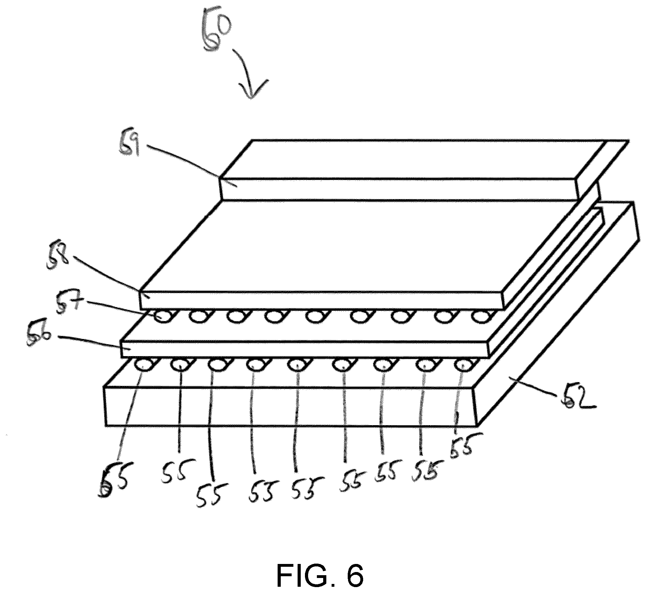

As shown in FIG. 6, gaps between the plurality of pressure-sensitive adhesive zones, 55 and 57 may be present after installing insulation board 53 and cover board 54. These gaps, which may also be referred to as voids. It will be appreciated that the nature of the construction boards, and more specifically the nature of the pressure-sensitive zones, provide for improved adhesion to the substrate, even where the substrate and/or the construction board planar surface being attached to the substrate include irregular surfaces. For example, as shown in FIGS. 4 and 5, roof system 40, 50 includes roof deck 42, 52, which in some embodiments is a B-type corrugated metal roof deck, the plurality of pressure-sensitive adhesive zones 45, 55 are oriented perpendicular to the raised surfaces, or ribs, of roof deck 42, 52 to provide repeatable contact area. Embodiments of the present invention advantageously achieve strong bonding with roof decks even when only partial contact is possible.

In one or more embodiments, a plurality of membrane panels are secured to the uppermost layer of construction boards and seamed together to form the weather-protective layer of the roof system. In one or more embodiments, the membrane panels are mechanically affixed to the roof system (e.g. mechanically fastened through the layers of construction board to the roof deck). In other embodiments, the membrane panels are adhesively secured to the uppermost layer of construction boards. In particular embodiments, the membrane panels carry a layer of pressure-sensitive adhesive that is used to adhesively mate the membrane panels to the uppermost layer of construction boards. The membrane panels can then be seamed using conventional techniques. For example, it is common to seam rubber membranes by using adhesive tapes or a pressure-sensitive adhesive that is pre-applied to the lap portion of the membrane (which may include the same pressure-sensitive adhesive used to secure the membrane to the roof deck). For thermoplastic membranes, it is typically useful to heat weld the membranes together and thereby form a seam.

As indicated above, practice of the present invention provides a fully-adhered system wherein the insulation boards and/or cover boards are fully adhered within the roofing system (e.g. they may be partially or fully adhered to the substrate). In one or more embodiments, these fully-adhered systems have improved resistance to wind uplift forces, and improved ease of application and installation. Also, 4'x8' insulation boards can advantageously be installed without release of volatile organic compounds to the atmosphere. Moreover, the adhesion of the board to the underlying substrate is technologically advantageous.

Practice of the present invention is not limited by the type of roof deck to which the construction board composites of the present invention may be secured. For example, the roof decks may include conventional roof decks, such as those constructed of wood, steel, and/or concrete.

Practice of this invention is likewise not limited by the selection of any particular roofing membrane, which may also be referred to herein as protective membranes. As the skilled person appreciates, roofing membranes provide weather-protective layer to the roofing system. In other words, these membranes are configured to resist environmental conditions experienced on the surface of the roof including water in the form of rain or snow and solar radiation, particularly UV radiation. Useful membranes include those that are known as single-ply roofing membranes. Useful roofing membranes include polymeric membranes. Useful polymeric membranes include both thermoplastic and thermoset materials. For example, and as is known in the art, membrane prepared from poly(ethylene-co-propylene-co-diene) terpolymer rubber or poly(ethylene-co-propylene) copolymer rubber can be used. Roofing membranes made from these materials are well known in the art as described in U.S. Patent Nos. 6,632,509, 6,615,892, 5,700,538, 5,703,154, 5,804,661, 5,854,327, 5,093,206, and 5,468,550, which are incorporated herein by reference. Other useful polymeric membranes include those made from various thermoplastic polymers or polymer composites. For example, thermoplastic olefin (i.e. TPO), thermoplastic vulcanizate (i.e. TPV), or polyvinylchloride (PVC) materials can be used. The use of these materials for roofing membranes is known in the art as described in U.S. Patent Nos. 6,502,360, 6,743,864, 6,543,199, 5,725,711, 5,516,829, 5,512,118, and 5,486,249, which are incorporated herein by reference. In one or more embodiments, the membranes include those defined by ASTM D4637/4637M-15 and/or ASTM D6878/6878M-21-21.

Still in other embodiments, the protective membrane can include bituminous or asphalt membranes. In one embodiment, these asphalt membranes derive from asphalt sheeting that is applied to the roof. These asphalt roofing membranes are known in the art as described in U.S. Patent Nos. 6,579,921, 6,110,846, and 6,764,733, which are incorporated herein by reference. In other embodiments, the protective membrane can derive from the application of hot asphalt to the roof.

Various modifications and alterations that do not depart from the scope and spirit of this invention will become apparent to those skilled in the art. This invention is not to be duly limited to the illustrative embodiments set forth herein.

## Claims

1. A construction board composite comprising:
(i) a construction board, wherein the construction board includes a first planar surface opposite a second planar surface;
(ii) a plurality of pressure-sensitive adhesive zones disposed on the first planar surface, where each pressure-sensitive adhesive zone of the plurality of pressure-sensitive adhesive zones includes (a) a portion that contacts the first planar surface and (b) an exposed portion; and
(iii) a release liner contacting at least a portion of the exposed portion.

2. The construction board composite of claim 1, where said construction board comprises a foamed polyisocyanurate.

3. The construction board composite of any of the preceding claims, where the construction board includes a facer, and where said facer forms said first planar surface.

4. The construction board composite of any of the preceding claims, where the release liner is a polymeric film or a polymeric-coated paper.

5. The construction board composite of any of the preceding claims, where each of the pressure-sensitive adhesive zones of the plurality of pressure-sensitive adhesive zones is **characterized by** a T_{g} of from about -100 to about -15 °C.

6. The construction board composite of any of the preceding claims, where each of the pressure-sensitive adhesive zones of the plurality of pressure-sensitive adhesive zones is **characterized by** a viscosity, at 148.9°C, of from about 10,000 to about 100,000 mPa·s.

7. The construction board composite of any of the preceding claims, where the plurality of pressure-sensitive adhesive zones are spaced apart from one another by at least 20.32 cm.

8. The construction board composite of any of the preceding claims, where each pressure-sensitive adhesive zone of the plurality of pressure-sensitive adhesive zones is continuously disposed on the planar surface extending from a first edge of the construction board to an opposite edge of the construction board.

9. The construction board composite of any of the preceding claims, where each pressure-sensitive adhesive zone of the plurality of pressure-sensitive adhesive zones has a thickness of about 1.27 mm to about 7.62 mm.

10. The construction board composite of any of the preceding claims, where each pressure-sensitive adhesive zone of the plurality of pressure-sensitive adhesive zones has a width of about 1.27 mm or greater.

11. The construction board composite of any of the preceding claims, where said plurality of pressure-sensitive adhesive zones is disposed over about 5 to about 75% of the first planar surface.

12. A flat or low-sloped roof system comprising:
(i) a roof deck;
(ii) a layer of construction boards disposed on the roof deck; and
(iii) a roofing membrane forming a water-proof protective layer over the roof system;
where the layer of construction boards includes one or more construction boards adhered to the roof deck through a plurality of pressure-sensitive adhesive zones.

13. The roof system of claim 12, where the layer of construction boards disposed on the roof deck is a first layer of construction boards, and where the roof system includes a second layer of construction boards disposed on the first layer of construction boards, and where the second layer of construction boards includes one or more construction boards adhered to the first layer of construction boards through a plurality of pressure-sensitive adhesive zones.

14. A method of installing construction boards on a roof, the method comprising:
(i) providing a roof substrate;
(ii) providing a plurality of construction board composites according to any of claims 1 to 11,
(iii) removing the release liner from each construction board composite of the plurality of construction board composites to expose the pressure-sensitive adhesive zones; and
(iv) contacting pressure-sensitive adhesive zones to the roof substrate.

15. A method for forming a construction board composite, the method comprising:
(i) providing a construction board including a first planar surface opposite a second planar surface;
(ii) conveying the construction board in a machine direction;
(iii) applying a plurality of pressure-sensitive adhesive zones to the first planar surface; and
(iv) applying a release liner to contact at least a portion of the plurality of pressure-sensitive adhesive zones.
